## Europäisches Patentamt

## European Patent Office

## Office européen des brevets

(19)

(11) Veröffentlichungsnummer: **0 013 329**
**B1**

(12) **EUROPÄISCHE PATENTSCHRIFT**

(45) Veröffentlichungstag der Patentschrift: **26.10.83**

(51) Int. Cl.³: **H 04 L 27/10, H 04 L 3/00**

(21) Anmeldenummer: **79104745.9**

(22) Anmeldetag: **28.11.79**

(54) **Verfahren und Schaltungsanordnung zur frequenzmodulierten Übertragung eines Binärsignals.**

(30) Priorität: **04.12.78 DE 2852374**

(43) Veröffentlichungstag der Anmeldung:
**23.07.80 Patentblatt 80/15**

(45) Bekanntmachung des Hinweises auf die Patenterteilung:
**26.10.83 Patentblatt 83/43**

(84) Benannte Vertragsstaaten:
**AT CH FR GB IT NL SE**

(56) Entgegenhaltungen:
**DE - A - 2 514 789**
**DE - A - 2 530 725**
**DE - A - 2 611 099**
**DE - B - 1 939 067**
**DE - B - 2 106 836**

**NACHRICHTENTECHNISCHE ZEITSCHRIFT, 23. Jahrgang, Heft 1, Januar 1970, VDE Verlag GmbH Berlin, U. APPEL und K. TRÖNDLE "Zusammenstellung und Gruppierung verschiedener Codes für die Übertragung digitaler Signale" Seiten 11—16**

(73) Patentinhaber: **SIEMENS AKTIENGESELLSCHAFT**
**Berlin und München Wittelsbacherplatz 2**
**D-8000 München 2 (DE)**

(72) Erfinder: **Haass, Adolf**
**Eichelhäherstrasse 54**
**D-8000 München 60 (DE)**

# Verfahren und Schaltungsanordnung zur frequenzmodulierten Übertragung eines Binärsignals

Die Erfindung bezieht sich auf ein Verfahren zur Übertragung von Daten, die in Form eines sendeseitigen Binärsignals (A) vorliegen und die mit einem frequenzmodulierten Signal zur Empfangsseite übertragen werden, wo nach einer Demodulation ein empfangsseitiges Binärsignal (N) gewonnen wird.

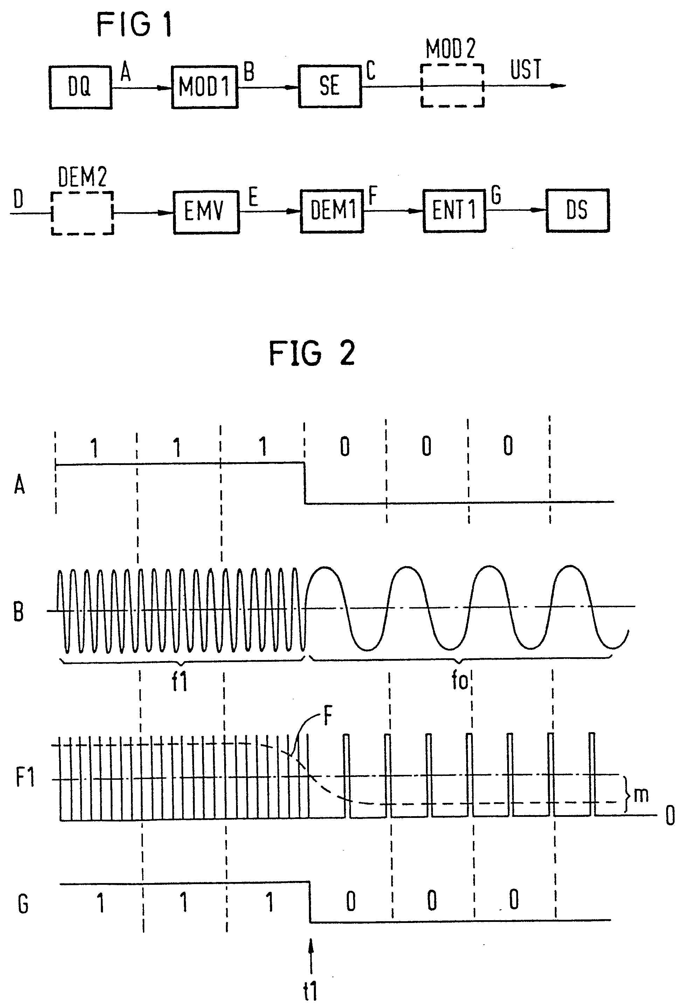

Die Figuren 1 und 2 beziehen sich auf bekannte Verfahren zur frequenzmodulierten Übertragung von Daten. Dabei gibt die in Fig. 1 dargestellte Datenquelle DQ das sendeseitige Binärsignal A ab, das in Fig. 2 dargestellt ist, Der Modulator MOD1 erzeugt aus dem Binärsignal A das frequenzmodulierte Signal B. Auf diese Weise wird den 1-Werten des Binärsignals A die Frequenz f1 und den O-Werten des Binärsignals A die Frequenz fO zugeordnet.

Im Sender SE wird das frequenzmodulierte Signal B leistungsmäßig verstärkt und entweder direkt oder über einen weiteren Modulator MOD2 der Übertragungsstrecke UST zugeleitet. Der Modulator MOD2 kann beispielsweise eine Frequenzumsetzung bewirken. Auf der Empfangsseite wird das empfangene Signal D entweder direkt oder über dem Demodulator DEM 2 dem Empfangsverstärker EMV zugeführt. Das am Eingang des Empfangsverstärkers EMV anliegende Signal entspricht dem Signal C am Ausgang des Senders SE. Das vom Empfangsverstärker EMV abgegebene Signal E wird einem Demodulator DEM1 zugeleitet. Das Signal E entspricht dem in Fig. 2 dargestellten Signal B. Der Demodulator DEM1 erzeugt in Abhängigkeit von der Frequenz des eingangs zugeführten Signals E ein demoduliertes Signal F, dessen Gleichspannung die Frequenz f1 bzw. fO signalisiert. Der mittlere Gleichstromwert m sollte der Mittenfrequenz der beiden Frequenzen f1 bzw. fO entsprechen. Der Entscheidungsstufe ENT1 wird das demodulierte Signal F zugeführt und mit einer vorgegebenen Gleichspannung verglichen, die der Mittenfrequenz entsprechen soll. Bei Gleichspannungsamplituden des Signals F, die größer als der Gleichstromwert m sind, werden 1-Werte des Binärsignals G abgegeben. Dies ist der Fall bis zum Zeitpunkt t1. Bei Gleichspannungsamplituden des Signals F, die negativer sind als der Gleichstromwert m, werden O-Werte des Binärsignals G abgegeben. Dies geschieht in der Darstellung nach dem Zeitpunkt t1. Zwecks einfacherer Darstellung wurden Laufzeitverzögerungen, insbesondere bewirkt durch die Übertragungsstrecke UST und sonstige Störungen nicht berücksichtigt, so daß das empfangsseitige Binärsignal G dem sendeseitigen Binärsignal A genau gleicht. Das empfangsseitige Binärsignal G wird der Datensenke DS zugeführt.

Im Zuge der Gewinnung des empfangsseitigen Binärsignals G können Schwierigkeiten auftreten. Falls sich der Gleichstromwert m des demodulierten Signals F ändert, dann ändert sich auch der Zeitpunkt t1, zu dem der Binärwertwechsel stattfindet. Wenn sich beispielsweise der Gleichstromwert m in positiver Richtung ändert, dann wird der Binärwertwechsel zu früh signalisiert. Ändert sich der Gleichstromwert m in negativer Richtung, dann wird der Binärwertwechsel zu einem späteren Zeitpunkt signalisiert. Besonders nachteilig ist es, wenn der mittlere Gleichstromwert m des Signals F derart verschoben ist, daß immer nur ein einziger Binärwert des Binärsignals G signalisiert wird.

Änderungen des Gleichstromwertes m können sich durch Schwankungen der beiden Kennfrequenzen f1, fO und der zwischen beiden liegenden Mittenfrequenz fm ergeben. Falls sich die Kennfrequenzen f1 und fO ändern, dann ändert sich auch die zeitliche Lage der Impulsspitzen des voll ausgezeichneten Signals F1 und in weiterer Folge ändert sich dadurch auch der mittlere Gleichstromwert m des demodulierten Signals F. Eine ungenaue Arbeitsweise des Demodulators DEM1 bewirkt ebenfalls eine Änderung des mittleren Gleichstromwertes m.

Bei dem anhand der Figuren 1 und 2 beschriebenen bekannten Verfahren ergibt sich somit die Schwierigkeit, daß bei Schwankungen der Mittenfrequenz fm, der Kennfrequenzen f1, fO und/oder bei Änderungen der Kennlinie des Demodulators DEM1 mit Signalsverzerrungen des empfangsseitigen Binärsignals G zu rechnen ist. Derartige Signalverzerrungen können vermieden werden, falls ein relativ aufwendiger Modulator MOD1 und ein relativ aufwendiger Demodulator DEM1 benutzt werden. Durch einen präzise arbeitenden Modulator MOD1 werden die Frequenzen f1 und fO stabilisiert. Durch einen präzise arbeitenden Demodulator DEM1 wird der mittlere Gleichstromwert m des demodulierten Signals F stabilisiert. Auf diese Weise werden mit relative großem technischen Aufwand Signalverzerrungen verhindert.

Durch die DE—OS 2 514 789 ist ein Verfahren zur frequenzmodulierten Übertragung eines Binärsignals bekannt, wonach ein sendeseitiges Binärsignal in ein codiertes Signal umgewandelt wird, das aus Nachrichtenbits, aus den Komplementen dieser Nachrichtenbits und aus einem oder mehreren Synchronisierbits besteht. Entsprechend diesem codierten Signal wird ein frequenzmoduliertes Signal erzeugt und zur Empfangsseite übertragen. Aus dem übertragenen Signal wird ein demoduliertes Signal gewonnen, mit dessen Amplituden die Binärwerte des ursprünglichen Signals erzeugt werden. Bei diesem gemäß der DE— OS 2 514 789 bekannten Verfahren treten die gleichen Schwierigkeiten auf, wie sie bereits anhand der Figuren 1 und 2 beschrieben wurden.

Aus der Zeitschrift NTZ, 1970, Heft 1, Seiten 11 bis 16, Abschnitt 2, 3 ist es bereits bekannt, gleichstromfreie Binärcodes und gleichstromfreie Ternärcodes zu erzeugen.

Falls, wie in Fig. 1 dargestellt, mit Hilfe des weiteren Modulators MOD2 und des Demodulators DEM2 Frequenzumsetzungen vorgenommen werden, dann können Frequenzfehler auftreten, die ebenfalls Änderungen des mittleren Gleichstromwertes m des demodulierten Signals F und daraus resultierende Signalverzerrungen bewirken. Derartige Signalverzerrungen lassen sich aber auch mit einem hochwertigen Modulator MOD1 und einem hochwertigen Demodulator DEM1 nicht verhindern.

Der Erfindung liegt die Aufgabe zugrunde ein demoduliertes Signal zu erzeugen, dessen Gleichstromkomponente auch dann keinen nachteiligen Einfluß hat, wenn Schwankungen der Kennfrequenzen oder der Kennlinie des empfangsseitigen Demodulators vorausgesetzt werden.

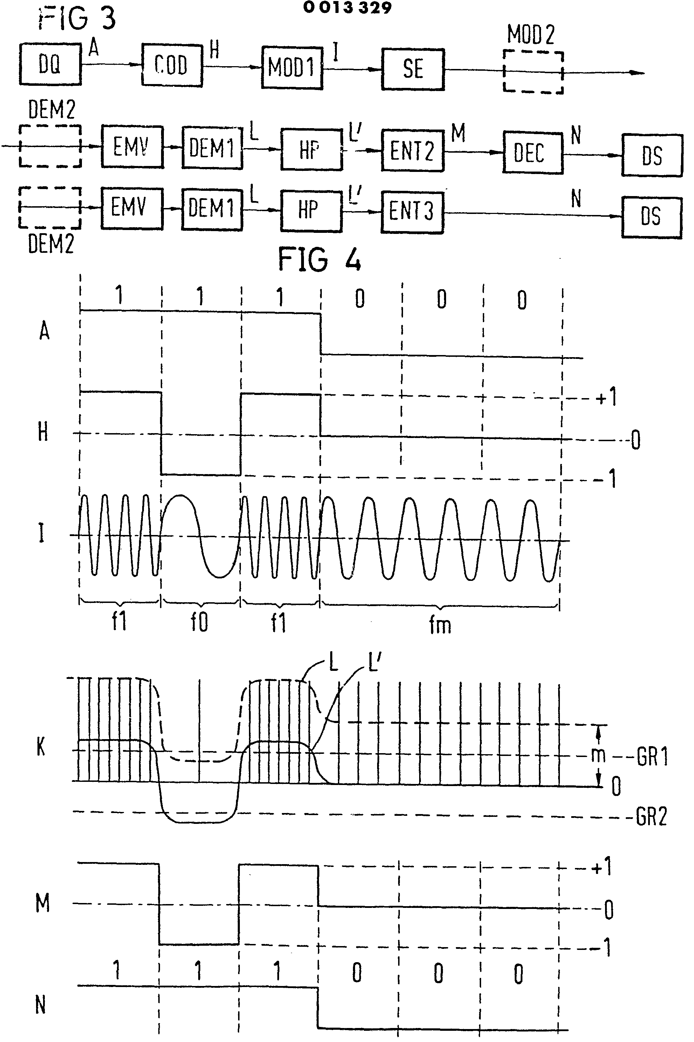

Die der Erfindung zugrungeliegende Aufgabe wird dadurch gelöst, daß das sendeseitige Binärsignal in ein digitales codiertes Signal umgewandelt wird, dessen Spektrum die Frequenz Null nicht enthält, daß aus dem digitalen codierten Signal das frequenzmodulierte Signal erzeugt wird, daß aus dem empfangenen frequenzmodulierten Signal ein demoduliertes Signal gewonnen wird, aus dessen Spektrum die Frequenz Null eliminert wird und ein frequenzmäßig beschnittenes, demoduliertes Signal erzeugt wird und daß mit den Amplituden des frequenzmäßig beschnittenen demodulierten Signals das empfangsseitige Binärsignal gewonnen wird (Fig. 3 und 4).

Das erfindungsgemäße Verfahren zeichnet sich dadurch aus, daß Schwankungen der Kennfrequenzen und/oder der Demodulatorkennlinie keine Signalverzerrungen verursachen können, weil einerseits das Spektrum des codierten Signals keine Gleichstromanteile besitzt und weil andererseits eventuelle im Spektrum des demodulierten Signals vorhandene Gleichstromanteile eliminiert werden, bevor mit Hilfe des daraus resultierenden frequenzmäßig beschnittenen demodulierten Signals das empfangsseitige Binärsignal erzeugt wird. Da also aus dem Spektrum des demodulierten Signals eventuelle vorhandene Gleichstromanteile weggefiltert werden, hat das frequenzmäßig beschnittene demodulierte Signal eine stets gleichbleibende Gleichstromkomponente, nämlich die Gleichstromkomponente 0. Diese Beschneidung des Spektrums wirkt sich hinsichtlich der Informationsübertragung nicht nachteilig aus, weil im Spektrum des codierten Signals keine Gleichstromanteile vorhanden sind, und daher auch nicht zur Informationsübermittlung verwendet werden. Bei der stets gleichbleibenden Gleichstromkomponente des frequenzmäßig beschnittenen Signals können sich keine Signalverzerrungen ergeben. Deshalb werden beim vorliegenden Verfahren an die Stabilität der beiden Kennfrequenzen keine hohen Anforderungen gestellt, so daß vergleichsweise billige Modulatoren und Demodulatoren zur Frequenzmodulation bzw. Frequenzdemodulation herangezogen werden können.

Ein weiterer Vorteil des vorliegenden Verfahrens ist darin zu sehen, daß zur Verstärkung des frequenzmäßig beschnittenen demodulierten Signals Wechselstromverstärker verwendet werden können, die einen geringeren Aufwand erfordern und leichter zu stabilisieren sind als vergleichbar Gleichstromverstärker.

Ein weiterer Vorteil des erfindungsgemäßen Verfahrens ist darin zu sehen, daß eventuelle andere Frequenzfehler—die beispielsweise bei Frequenzumsetzungen auf Trägerfrequenzen entstehen können—keine Rolle spielen, weil sich auch derartige Frequenzfehler—wegen der Eliminierung der Gleichstromanteile im Spektrum des frequenzmäßig beschittenen demodulierten Signals—nicht nachteilig auswirken können.

Grundsätzlich kann das sendeseitige Binärsignal in jedes codierte Signal umgewandelt werden, welches keine Gleichstromanteile besitzt. Die codierten Signale, die diese Eigenschaft haben, können aber mehrstufige Signale sein, beispielsweise zweistufige Signale oder dreistufige Signale. Als zweistufiges Signal wäre ein codiertes Signal geeignet, das gemäß dem sogenannten Coded-Diphase-Verfahren codiert ist. Also codiertes Signal wäre auch das dreistufige Signal geeignet, das gemäß dem sogenannten AMI-Verfahren (Alternate Mark Invertion Verfahren) bekannt ist. Besonders bewährt hat sich die Umwandlung des sendeseitigen Binärsignals in ein dreistufiges Pseudo-Ternärsignal, weil dieses Pseudo-Ternärsignal nur die halbe Bandbreite im Vergleich zum Coded-Diphase-Signal benötigt.

Bei einem bewährten Ausführungsbeispiel wird aus dem frequenzmäßig beschnittenen demodulierten Signal ein empfangsseitiges codiertes Signal gewonnen, das dem sendeseitien codierten Signal entspricht. Aus dem empfangsseitigen codierten Signal wird dann das empfangsseitige Binärsignal gewonnen.

Bei einer Schaltungsanordnung zur Durchführung des Verfahrens hat es sich als zweckmäßig erwiesen, daß zur Eliminierung der Gleichstromanteile aus dem Spektrum des demodulierten Signals ein Hochpaß, vorzugsweise ein Kondensator oder ein Transformator, vorgesehen ist.

Im folgenden werden Ausführungsbeispiele der Erfindung anhand der Figuren 3 und 4 beschrieben, wobei in allen Figuren 1 bis 4 gleiche Gegenstände mit gleichen Bezugszeichen bezeichnet sind.

Es zeigen:

Fig. 3 Ausführungsbeispiele eines Verfahrens zur frequenzmodulierten Übertragung von Daten und

Fig. 4 mehrere Signale, die im Bereich der in Fig. 3 dargestellten Übertragungseinrichtungen auftreten.

Fig. 3 zeigt, daß das Binärsignal A der Datenquelle DQ, dem Codierer COD zugeführt wird, der das dreistufige Pseudo-Ternärsignal H abgibt. Die drei Stufen dieses Pseudo-Ternärsignals sind mit den Bezugszeichen +1, 0, −1 bezeichnet. Den 1-Werten des Binärsignals A werden abwechselnd die Ternärwerte +1 bzw. −1 des Pseudo-Ternärsignals H zugeordnet. Den O-Werten des Binärsignals A werden die O-Ternärwerte des Pseudo-Ternärsignals H zugeordnet.

Der Modulator MOD1 erzeugt das frequenzmodulierte Signal I. Die Frequenz f1 signalisiert den Ternärwert +1 des Signals H, die Frequenz f0 signalisiert den Ternärwert −1 des Signals H und die Frequenz fm signalisiert den Ternärwert O des Signals H. Dieses frequenzmodulierte Signal I wird mit Hilfe des Senders SEW übertragen und mit Hilfe des Empfangsverstärkers EMV auf der Empfangsseite verstärkt.

Dem Demodulator DEM1 wird ein Signal zugeführt, das dem in Fig. 4 dargestellten Signal I gleicht. Bei jedem Nulldurchgang dieses Signals wird ein kurz dauernder Impuls erzeugt und mit Hilfe eines hier nicht dargestellten Tiefpasses wird aus all diesen kurz dauernden Impulsen das demodulierte Signal L gewonnen, das in Fig. 4 gestrichelt eingezeichnet ist. Falls sich die Frequenzen f1, f0, fm ändern, dann ändern sich auch die Abstände der einzelnen kurz dauernden Impulse des Signals K, so daß sich in weiterer Folge die Gleichstromkomponente des demodulierten Signals L verschiebt. Aus dem Spektrum dieses demodulierten Signals L werden die Gleichstromanteile eliminiert, so daß sich das frequenzmäßig beschnittene demodulierte Signal L' ergibt. Durch diese frequenzmäßige Beschneidung des Signals L geht keine Information verloren, weil im Spektrum des codierten Signals H keine Gleichstromanteile vorhanden sind und daher auch keine Informationen mit derartigen Gleichstromanteilen übertragen werden. Diese Filterung des Signals L wird mit dem in Fig. 3 dargestellten Hochpaß HP durchgeführt. Beispielsweise kann als Hochpaß ein Kondensator oder ein Transformator vorgesehen sein. Bei der weiteren Auswertung des frequenzmäßig beschnittenen demodulierten Signals L' spielen daher Änderungen des mittleren Gleichstromwertes m keine Rolle. Schwankungen der Frequenzen f1, f0, fm und/oder Änderungen der Demodulatorkennlinie beeinflussen zwar den mittleren Gleichstromwert m, können sich aber nicht nachteilig auswirken, weil im Signal L' dieser mittlere Gleichstromwert m gleich null gesetzt wird.

Der Entscheidungsstufe ENT2 wird das Signal L' zugeführt. Diese Entscheidungsstufe erkennt den Ternärwert +1 des Signals M, falls die Amplitude des Signals L' positiver ist als der Schwellwert GR1. Ist die Amplitude des Signals L' negativer als der zweite Schwellwert GR2, dann ergibt sich der Ternärwert −1 de Signals M. Falls die Amplitude des Signals L' im Bereich zwischen den beiden Schwellwerten GR1 und GR2 verläuft, dann ergibt sich der Ternärwert O des Signals M. Das Signal M gleicht somit dem sendeseitig vom Codierer COD abgegebenen Signal H.

Mit Hilfe des Decodierers DEC wird aus dem Signal M das Binärsignal N gewonnen, das dem sendeseitigen Binärsignal A gleicht. Dieses Binärsignal N wird der Datensenke DS zugeleitet.

Es wäre grundsätzlich denkbar, anstelle der Entscheidungsstufe ENT2 und anstelle des Decodierers DEC die Entscheidungsstufe ENT3 vorzusehen, welche direkt aus dem Signal L' das Binärsignal N erzeugt.

Bei den in Fig. 4 dargestellten Signalen wurden Signalstörungen und Signalverzögerungen nicht berücksichtigt. Es wurde also zwecks einfacherer Darstellung angenommen, daß die Binärwertwechsel des empfangsseitigen Binärsignals N gleichzeitig mit den Binärwertwechseln des sendeseitigen Signals A auftreten. Tatsächlich sind die Binärwertwechsel des Binärsignals N im allgemeinen verzögert gegenüber den Binärwertwechseln des sendeseitigen Binärsignals A.

Im Übertragungsweg zwischen dem Ausgang des Hochpasses HP und dem Eingang der Datensenke DS können Wechselstromverstärker eingeschaltet sein, da es bei der weiteren Auswertung des Signals L' nur auf die Schwankungen dieses Signals, nicht aber auf deren spezielle Gleichstromkomponente ankommt. Derartige Wechselstromverstärker lassen sich relativ einfach stabilisieren und erfordern einen geringeren technischen Aufwand als vergleichbare Gleichstromverstärker, wie sie beispielsweise zur Verstärkung des in Fig. 2 gestrichelt dargestellten Signals F erforderlich wären.

**Patentansprüche**

1. Verfahren zur Übertragung von Daten, die in Form eines sendeseitigen Binärsignals (A) vorliegen und die mit einem frequenzmodulierten Signal zur Empfangsseite übertragen werden, wo nach einer Demodulation ein empfangsseitiges Binärsignal (N) gewonnen wird, dadurch gekennzeichnet, daß das sendeseitige Binärsignal (A) in ein digitales codiertes Signal (H) umgewandelt wird, dessen Spektrum die Frequenz Null nicht enthält, daß aus dem digitalen codierten Signal (H) das frequenzmodulierte Signal (I) erzeugt wird, daß aus dem empfangenen frequenzmodulierten Signal (I) ein demoduliertes Signal (L) gewonnen wird, aus dessen Spektrum die Frequenz Null eliminiert wird und ein frequenzmäßig beschnittenes, demoduliertes Signal (L') erzeugt wird und daß mit den Amplituden des frequenzmäßig beschnittenen demodulierten Signals (L') das empfangsseitige Binärsignal (N) gewonnen wird (Fig. 3 und 4).

2. Verfahren nach Anspruch 1, dadurch gekennzeichnet, daß als digitales codiertes Signal ein Pseudo-Ternärsignal (H) erzeugt wird (Fig. 4).

3. Verfahren nach Anspruch 1, dadurch gekennzeichnet, daß aus dem frequenzmäßig beschnittenen demodulierten Signal (L') ein empfangsseitiges digitales codiertes Signal (M) gewonnen wird, das dem sendeseitigen digitalen codierten Signal (H) entspricht und daß aus dem empfangsseitigen digitalen codierten Signal (M) das empfangsseitige Binärsignal (N) gewonnen wird (Fig. 3 und 4).

4. Verfahren nach Anspruch 3, dadurch gekennzeichnet, daß aus dem frequenzmäßig beschnittenen demodulierten Signal (L') unmittelbar—ohne Gewinnung des empfangsseitigen digitalen codierten Signals (M)—das empfangsseitige Binärsignal (N) gewonnen wird (Fig. 3 und 4).

5. Schaltungsanordnung zur Durchführung des Verfahrens nach Anspruch 1, dadurch gekennzeichnet, daß zur Eliminierung der Frequenz Null aus dem Spektrum des demodulierten Signals (L) ein Hochpaß—vorzugsweise ein Kondensator oder ein Transformator—vorgesehen ist (Fig. 3).

## Revendications

1. Procédé pour la transmission de données qui sont présentes sous la forme d'un signal binaire (A) situé côté émission et qui sont transmises avec un signal modulé en fréquence au côté réception où, après démodulation, on obtient un signal binaire (N) côté réception, caractérisé par le fait que le signal binaire (A) situé côté émission est transformé en un signal numérique codé (H) dont le spectre ne contient pas la fréquence zéro, qu'à partir du signal numérique codé (H) on produit le signal (I) modulé en fréquence, qu'à partir du signal (I) modulé en fréquence et reçu, on obtient un signal démodulé (L) du spectre duquel on élimine la fréquence zéro et on produit un signal démodulé (L') rogné du point de vue de la fréquence, et qu'avec les amplitudes du signal démodulé (L'), rogné du point de vue de la fréquence, on obtient le signal binaire (N) situé côté émission (figures 3 et 4).

2. Procédé selon la revendication 1, caractérisé par le fait que l'on produit, comme signal numérique codé, un signal pseudo-ternaire (H) (figure 4).

3. Procédé selon la revendication 1, caractérisé par le fait qu'à partir du signal démodulé (L') rogné du point du vue de la fréquence, on obtient un signal codé numérique (M) situé côté réception, et correspondant au signal codé numérique (H) situé côté émission, et qu'à partir du signal numérique codé (M) situé côté réception, on obtient le signal binaire (N) situé côté réception (figures 3 et 4).

4. Procédé selon la revendication 3, caractérisé par le fait qu'on obtient à partir du signal démodulé (L') rogné, directement—sans obtention du signal numérique codé (M) situé du côté réception—, le signal binaire (N) situé côté réception (figures 3 et 4).

5. Circuit pour la mise en oeuvre du procédé selon la revendication 1, caractérisé par le fait que pour éliminer la fréquence zéro du spectre du signal démodulé (L), il est prévu un passe-haut, de préférence un condensateur ou un transformateur. (figure 3).

## Claims

1. Method for transmitting data which are present in the form of a transmitting-end binary signal (A) and which by means of a frequency-modulated signal are transmitted to the receiving end, where following a demodulation, a receiving-end binary signal (N) is produced, characterised in that the transmitting-end binary signal (A) is converted into a digital coded signal (H), whose spectrum does not include the frequency zero, that the frequency-modulated signal (I) is produced from the digital coded signal (H), that a demodulated signal (L) is obtained from the received frequency-modulated signal (I), from the spectrum of which demodulated signal the frequency zero is eliminated and a demodulated signal (L') which is restricted in terms of frequency is produced, and that the receiving-end binary signal (N) is produced from the amplitudes of the demodulated signal (L') which is restricted in terms of frequency (Fig. 3 and 4).

2. Method as claimed in claim 1, characterised in that a pseudo-ternary signal (H) is produced as digital coded signal (Fig. 4).

3. Method as claimed in claim 1, characterised in that a receiving-end digital coded signal (M) corresponding to the transmitting-end digital coded signal (H) is produced from the demodulated signal (L') which is restricted in terms of frequency, and that the receiving-end binary signal (N) is produced from the receiving-end digital coded signal (M) (Fig. 3 and 4).

4. Method as claimed in claim 3, characterised in that the receiving-end binary signal (N) is obtained directly from the demodulated signal (L'), which is restricted in terms of frequency, without obtaining the receiving-end digital coded signal (M) (Fig. 3 and 4).

5. Circuit arrangement for implementing the method as claimed in claim 1, characterised in that in order to eliminate the frequency zero from the spectrum of the demodulated signal (L), there is provided a high-pass filter—preferably a capacitor or a transformer (Fig. 3).

# FIG 1

# FIG 2

**FIG 3**

0013 329

**FIG 4**